# EUROPEAN PATENT SPECIFICATION

(11) **EP 4 062 327 B1**
(45) Date of publication and mention of the grant of the patent: **18.11.2026**
(21) Application number: 20886775.4
(22) Date of filing: 07.10.2020
(51) Int. Cl.: G06N 5/022, G06F 16/28, G06F 16/958, H04L 9/40, G06N 20/00, H04N 1/44

(54) **METHOD AND SYSTEM FOR IDENTIFYING INFORMATION OBJECTS USING DEEP AI-BASED KNOWLEDGE OBJECTS**
VERFAHREN UND SYSTEM ZUM IDENTIFIZIEREN VON INFORMATIONSOBJEKTEN UNTER VERWENDUNG VON TIEFEN AI-BASIERTEN WISSENSOBJEKTEN
PROCÉDÉ ET SYSTÈME D'IDENTIFICATION D'OBJETS D'INFORMATION AU MOYEN D'OBJETS DE SAVOIR À BASE D'IA PROFONDE

(30) Priority: 14.11.2019 US 201962974108 P; 28.09.2020 US 202017035071
(43) Date of publication of application: 28.09.2022
(73) Proprietor: Ghangorcloud, Inc., San Jose, CA 95110 (US)
(72) Inventor: MUSTAFA, Tarique, San Jose, California 95110 (US); METZLER, John, San Jose, California 95110 (US); AZHAR, Wasim, San Jose, California 95110 (US); CHANDWANI, Avinash, San Jose, California 95110 (US); PANDA, Bhanu, San Jose, California 95110 (US); MONOKANDILOS, Mike, San Jose, California 95110 (US); DENDULURI, Ramu, San Jose, California 95110 (US)
(74) Representative: K2 IP Limited
(86) International application number: PCT/US2020/054638
(87) International publication number: WO 2021/096615

(56) References cited:
- US-A1- 2003 135 492
- US-A1- 2007 203 867
- US-A1- 2012 323 860
- US-A1- 2012 323 860
- US-A1- 2013 325 871
- US-A1- 2014 372 478
- AHMAD SHABIR ET AL: "Design and Implementation of Decoupled IoT Application Store: A Novel Prototype for Virtual Objects Sharing and Discovery", ELECTRONICS, vol. 8, no. 3, 4 March 2019 (2019-03-04), pages 285, XP055827477, DOI: 10.3390/electronics8030285
- FORGY: "Rete: A fast algorithm for the many pattern/many object pattern match problem", ARTIFICIAL INTELLIGENCE, 1982, XP000374011, Retrieved from the Internet <URL:http://www.csl.sri.com/users/mwfong/Technical/RETE%20Match%20Algorithm%20-%20Forgy%20OCR.pdf> [retrieved on 20201217]

## Description

### TECHNICAL FIELD

Embodiments of the invention relate generally to identifying and discovering information objects. More particularly, embodiments of the invention relate to identifying information objects using AI-based knowledge objects.

### BACKGROUND

Automatic identification and discovery of information objects that are embedded in static or streaming volume of electronic, electromagnetic, digital or analogue corpus is an important technical advancement which is customary to build intelligent systems. Intelligent adaptive systems that are required to "adapt and grow" with new knowledge must possess the ability to (1) identify information objects embedded inside a corpus using a-priori declared knowledge objects, and (2) discover new knowledge objects in the residual portion of the corpus, (3) learn the a-posteriori discovered knowledge, and (4) update its knowledge object-base.

Over the last several decades, numerous intelligent systems have been built that utilize neural networks techniques for leaming (a sub-field of Artificial Intelligence usually known as machine leaming). Neural networks have also been used to identify objects of sorts, e.g. training a neural network by ingesting volume of images of a dog or a car so that it can correlate certain features of the image to that of a physical object such as a dog (or a car) has been accomplished to varying degrees of success in a large volume of published research. However, "discovery" of an object (physical or conceptual) that was not known to the system a-priori has been a tremendous challenge, especially if the objective is to accomplish the goal in an automated or sub-automated fashion.

This difficulty has been in the past circumvented by contrivances of convenience such as the "closed world assumption" in classical artificial intelligence (AI) wherein assumption is made that "if it is not known it does not exist". In the more sophisticated circumstances wherein it is important to discover and highlight the objects that were not previously known to the system, the ability to automatically (or sub-automatically) discover such unknown objects is unequivocal. US 2012/323860 A1 introduces a system and method for identification of duplicate data directly at a data-object level. A hierarchical tree of fingerprints is used for each data object to compare data objects and identify duplicate data blocks referenced by the data objects.

### BRIEF DESCRIPTION OF THE DRAWINGS

Embodiments of the invention are illustrated by way of example and not limitation in the figures of the accompanying drawings in which like references indicate similar elements.

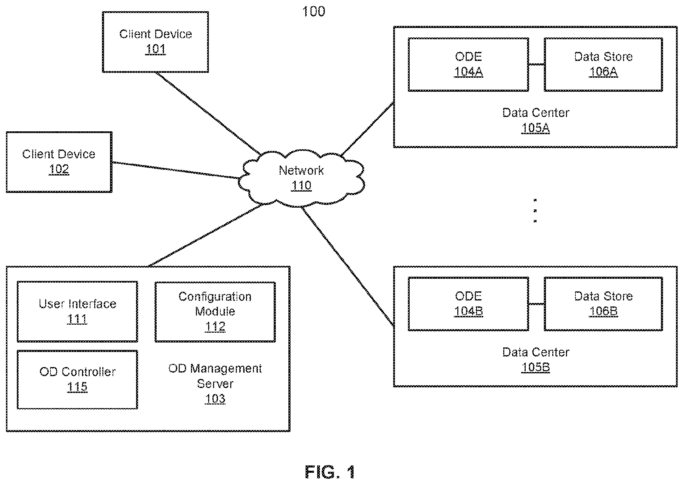

Figures 1A and 1B are block diagrams illustrating an example of system configuration for matching images with content items according to some embodiments of the invention.
Figure 1 is a block diagram illustrating a network system for object discovery according to one embodiment.
Figure 2 is a block diagram illustrating an example of an object discovery management server according to one embodiment.
Figure 3 is a block diagram illustrating an example of an object discovery engine according to one embodiment.
Figure 4 is a block diagram illustrating an example of a repository configuration data structure according to one embodiment.
Figure 5 is a block diagram illustrating an example of a data structure representing a knowledge object according to one embodiment.
Figure 6 shows some data structures of knowledge objects according to certain embodiments of the invention.
Figures 7A-7C show certain examples of knowledge objects according to certain embodiments.
Figure 8 is a block diagram illustrating a processing flow of an object discovery process according to one embodiment.
Figures 9A-9D show some examples of memory spaces for storing knowledge objects according to some embodiments.
Figure 10 is a flow diagram illustrating an example of a process of object discovery according to one embodiment.
Figure 11 is a flow diagram illustrating an example of a process of noise reduction according to one embodiment.
Figure 12 is a flow diagram illustrating a process of object discovery according to another embodiment.
Figures 13A and 13B show some examples of object discovery results according to some embodiments.
Figure 14 is a block diagram illustrating a data processing system according to one embodiment.

### DETAILED DESCRIPTION

Various embodiments and aspects of the invention will be described with reference to details discussed below, and the accompanying drawings will illustrate the various embodiments.

Reference in the specification to "one embodiment" or "an embodiment" means that a particular feature, structure, or characteristic described in conjunction with the embodiment can be included in at least one embodiment of the invention. The appearances of the phrase "in one embodiment" in various places in the specification do not necessarily all refer to the same embodiment.

According to some embodiments, an information object identification and discovery server has been presented. A given corpus of information (such as a database of unstructured documents, structured data from the database tables, or any other modality of data such as images, digital signal or analogue signals) is treated as a 'unique sequence' of canonical structures. These canonical structures are called information objects that are categorized into a set of primitive types. In real-life, these information objects may represent a physical object, an imaginary object, a conceptual object, or a data/knowledge object about them. The corpus of information is also expected to contain noise objects - these items are not information objects. The corpus of information is also expected to contain items that are not known to be information objects a-priori but are discovered and classified a-posteriori in the process as new knowledge objects. discovery of new information objects: the process results in the "discovery" of new "types" and "classes" of information objects that were not known a-priori. This is effectively a "discovery induced learning process" (that could be automatic or human assisted learning).

In one embodiment, an information object identification and discovery server contains declarative knowledge-bases pertaining to each type and class of information object. In one embodiment, there are four sets of declarative knowledge-bases, including three "field type" categories and one "expression type" category. The "field type" categories include α-knowledge object set, β-knowledge object set, and v-knowledge object set. The "expression type" category includes an ε-knowledge object set. The corpus of information is also expected to contain items that are not known to be information objects α-priori.

According to one embodiment, an object identification engine receives a request from an object discovery controller (e.g., Web portal or configuration server) over a network for identifying one or more objects stored in a storage device. In response to the request, a file is retrieved from the storage device based on the request and analyzed using a predetermined analysis algorithm (e.g., proximity analysis) to determine a list of fields as part of content of the file. Each field may include one or more terms (e.g., words, numbers, phrases). A first list of knowledge objects (referred to as κ-objects) is determined. Each of the x-objects corresponds to one of the data type categories. Each κ-object includes, amongst others, a value attribute to specify matching data to match a field associated with an information object, a verify attribute to specify a method to verify the field of the information object, and a tag attribute to specify one of the formats associated with the matching data stored in the value attribute.

For each of the fields identified in the file, the system matches the field against each of the κ-objects in the first list to determine whether the field matches the κ-objects. In one embodiment, a hash table is maintained for the κ-objects in the first list. In response to a particular field, the field is input to the hash table. The hash table returns one or more pointers or object identifiers referencing to one or more κ-objects. The field is then examined to determine whether the field contains data matching the data stored in the value attribute and a format specified in the tag attribute of the κ-object. A verification method or process is identified in the verify attribute of the x-object and executed to verify whether the field indeed matches the κ-object. If the verification process has been executed successfully, an object identifier (ID) of the κ-object is inserted into a result list and a counter associated with the κ-object may be incremented in the result list. The counter represents a frequency of occurrence of the κ-object matched or alternatively, the counter represents a number of the fields extracted from the file match the κ-object. If any of the above processes fails, the field may be inserted into a list of unknown objects representing the fields that the system cannot recognize or verify. The unknown objects may be utilized for machine learning subsequently, such that these unknown objects can be recognized in the future.

In one embodiment, the field is examined to determine whether the field contains at least a portion of the value (e.g., leading characters and/or numbers) matching the values (e.g., characters, numbers, or a combination thereof) stored in the value attribute of the κ-object. In one embodiment, a format of the subsequent values of the field is examined in view of the format specified in the tag attribute of the κ-object. The tag attribute may indicate the specific format or pattern of the expected format. For example, a tag attribute may include a national identifier identifying a particular country where each country may have a different format for a particular category of data (e.g., social security numbers), which may be specified in the value attribute.

**In** one embodiment, in matching the field against each of the κ-objects in the first list, a second list as a sublist of x-objects associated with a second type of the κ-objects is identified. A field type of the field is also determined, such as an alpha, a numeric, or an alphanumeric type, as well as the size of the field. The field type is then matched against a structure attribute of the κ-objects in the second list to identify a subset of the κ-objects as matching κ-object candidates. Once the κ-objects matching the field type of the field have been identified, the size of the field is matched with a sizeof attribute of the κ-object. If any of the above matching processes fails, the field will be inserted in the unknown object list.

**In** one embodiment, a finite state automaton (FSA) may be specified in the value attribute of the κ-object. The FSA may be executed in response to determining that the size of the field matches the expected sizeof attribute of the κ-object. If the FSA has been executed successfully, a verification method specified in the verify attribute of the κ-object may be executed. The verification method refers to a specific verification algorithm to be performed on the field if the operations above have been performed successfully. Once the field has been verified, the object ID of the κ-object is inserted into the result list. Otherwise, the field is inserted as an unknown object into the unknown object list. A machine-learning process may then be performed on the unknown objects.

**In** one embodiment, prior to matching the fields of the file to the κ-objects of the list, certain terms or fields that are not relevant may be screened and filtered out, referred to as noise objects or noise terms. A list of noise objects or noise terms may be preconfigured. For each of the fields extracted from the file, the field is examined to determine whether the field matches any of the noise objects in the list. If a field matches any of the noise objects, the field may be considered as a noise field and the field may be removed from the file. The file with the noise fields removed is then processed as described above.

In one embodiment, if a particular field has been determined to match any of the κ-objects, an enforcement action may be performed according to an enforcement policy. An enforcement policy may be enabled or specified in an enabled flag attribute of the κ-object. An enforcement action may include encrypting the file, restricting access of the file, sending an alert to a preconfigured destination, disabling printing or downloading the file, disabling an account associated with the file, performing a quarantine of the file, restricting sharing or viewing of the file, or revoking access rights of the file.

Figure 1 is a block diagram illustrating a network system for object discovery according to one embodiment. Referring to Figure 1, system 100 includes, but is not limited to, one or more client devices 101-102 communicatively coupled to object discovery (OD) management server 103 over network 110. Client devices 101-102 may be any type of client devices such as a personal computer (e.g., desktops, laptops, and tablets), a "thin" client, a personal digital assistant (PDA), a Web enabled appliance, a Smartwatch, or a mobile phone (e.g., Smartphone), etc. Network 110 may be any type of networks such as a local area network (LAN), a wide area network (WAN) such as the Internet, or a combination thereof, wired or wireless.

In one embodiment, OD management server 103 may be a Web server or an application server having a user interface 111, such as a Web interface, to allow a user or an administrator of client devices 101-102 to access and configure one or more OD tasks. For example, a user (e.g., an administrator of an enterprise or corporation) can access user interface 111 (e.g., Web pages) to select certain criteria for object discovery. Based on the information provided by the user, configuration module 112 is to interpret and compile the user data or user selection. OD controller is then configured to determine a set of configuration information, including a storage location to be scanned, a list of knowledge objects (κ-objects), and optional one or more enforcement policies to form one or more OD tasks. The OD tasks are then distributed to OD engines (ODEs) 104A and/or 104B (collectively referred to as ODEs 104) located in various data centers 105A-105B (collectively referred to as data centers 105) of different types or classes (e.g., drop box, databases, or other cloud storages).

In one embodiment, OD management server 103 may be located in a main corporate data center of an organization or enterprise, while data centers 105 may be local or distributed data centers associated with the organization. Note that data centers 105 may be a multi-tenant data centers that provide storage services to a variety of clients. In one embodiment, OD management server 103 may operate as a frontend server (e.g., a Web server) while ODEs 104 may by hosted by a backend server such as an application server or a backend server. Server 103 and ODEs 104 may communicate with each other via a secure connection.

In one embodiment, once the OD tasks have been configured, the OD controller 115 transmits the OD configuration information to one or more of ODEs 104. Based on the OD configuration information, some or all of the ODEs 104 are configured to scan the files stored in data stores 106A-106B (collectively referred to as data stores 106), which may represent any cloud storage servers, databases, software as a service (SaaS) systems, software as a platform (SaaP) systems, or any other data sharing platforms, etc. A scanning result or a result list containing a list of κ-objects that match any of the fields of the files stored in the data stores 106. The scanning result is then returned back to OD controller 115 and may be returned or displayed to the users via user interface 111. Note that ODE 104A may securely access data store 106B of data center 105B for object discovery without deploying ODE 104B, or vice versa.

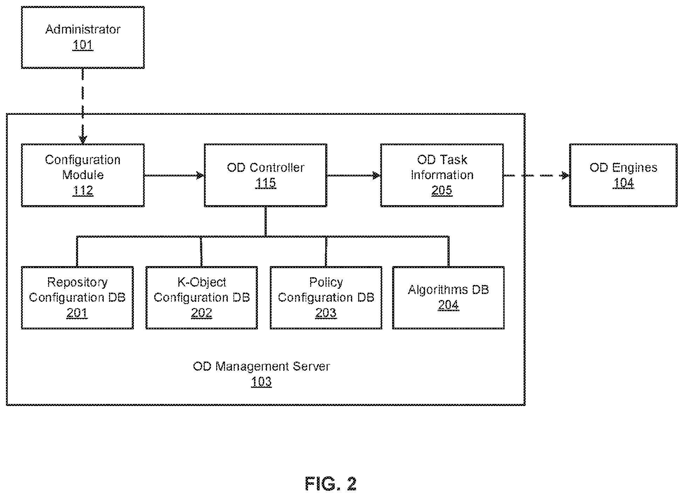

Figure 2 is a block diagram illustrating an example of an object discovery management server according to one embodiment. Referring to Figure 2, OD management server 103 hosts an OD controller 115 and configuration module 112. As described above, configuration module 112 receives configuration data from user 101 via a user interface. The configuration data may include information identifying the OD operations to be performed either periodically or on-demand at a specific storage location for a specific type of content. For example, an administrator may want to scan any file that contains certain social security numbers or credit card numbers, etc. Configuration module 112 compiles this information and transmits to OD controller 115.

Based on the user configuration data received from configuration module 112, OD controller 115 determines and generates a repository configuration information of a storage location to be scanned based on repository configuration database 201. The repository configuration database 201 may store all of the repository configuration information of a variety of storage locations or storage servers it supports. In addition, OD controller 115 determines or identifies a list of κ-objects from rule configuration database 202 that are required for the object discovery operations requested by the user. Each κ-object represents a set of rules or a category of data governing the discovery of a specific field or term (also referred to as an information object).

Further, dependent upon the specific user configuration, an enforcement policy may be enabled for any one or more of the κ-objects identified for the specific object discovery at the point in time. If such an enforcement policy has been specified or enabled, OD controller 115 further identifies at least one enforcement policy for one or more κ-objects. The information is then compiled into a task configuration package 205. The task configuration package 205 may include the repository configuration information associated with a repository or storage to be scanned, a list of κ-objects for object discovery, and optional one or more enforcement policies.

The OD task configuration package 104 may include the actual data structures containing the repository configuration information, the κ-objects, and enforcement policies. Alternatively, the OD task configuration package may only contain the identifiers (IDs) of the repository configuration information, the κ-objects, and enforcement policies, where the actual information can be determined by ODEs 104 locally based on the identifiers. The OD task configuration package 205 is then transmitted to one or more ODEs 104 for object discovery operations to be performed at repositories of their respective data centers.

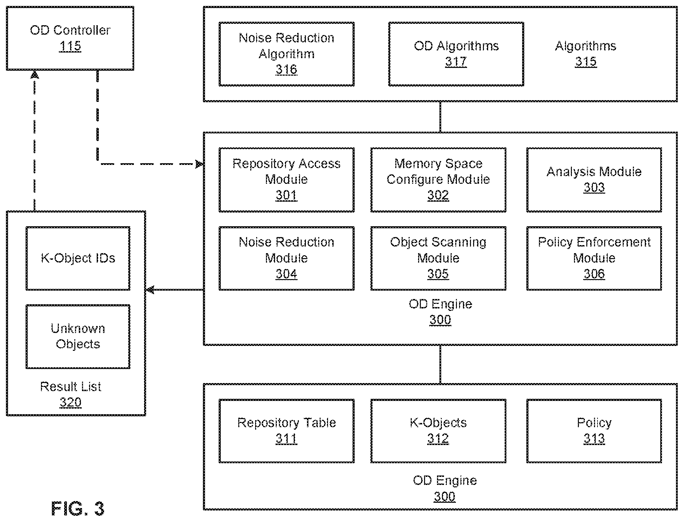

Figure 3 is a block diagram illustrating an example of an object discovery engine according to one embodiment. Referring to Figure 3, ODE 300 may represent any of the ODEs 104 of Figure 1. In one embodiment, ODE 300 includes, but is not limited to, repository access module 301, memory space configuration module 302, file analysis module 303, noise reduction module 304, object scanning module 305, and policy enforcement module 306. Note that some or all of these modules may be integrated into fewer modules or a single module, which may be implemented in software, hardware, and a combination thereof.

In one embodiment, ODE 300 receives OD task configuration information 205 from OD controller 115. The task configuration information 205 includes a repository configuration table 311, a list of κ-objects 312, and optional one or more enforcement policies 313. In response to the task configuration 205, repository access module 301 is configured to access a storage location specified in the repository configuration table 311. Repository access module 301 is configured to access the specific storage location via a universal resource locator (URL) and authenticating the account associated with the storage location using authentication information (e.g., username and password) provided in the repository configuration table 311. Repository access module 301 then accesses and retrieves one or more files from the storage location using proper file accessing protocol specified in repository configuration table 311 such as network file system protocols.

In one embodiment, based on the list of x-objects 312, memory space configuration module 302 allocates, configures, and populates the κ-objects in one or more memory regions, referred to herein as memory spaces. Note that the list of x-objects may include multiple types or classes of x-objects. For each type of x-objects, a specific memory space is created to store the corresponding κ-objects. In addition, for each type of κ-objects, a hash table is created for that particular type of κ-objects. The hash table is utilized to quickly identify and retrieve a memory pointer (e.g., a memory address) of a κ-object based on an input (e.g., a field having one or more terms extracted from a file).

In response to a file retrieved from a storage location, in one embodiment, file analysis module 303 performs an analysis on the content of the file to determine a set of fields, where each field may include one or more terms (e.g., words, numbers, or a combination thereof). Analysis module 303 may perform a proximity analysis on the content to identify different fields such as social security numbers, credit card numbers, etc.

According to one embodiment, prior to perform the actual object discovery process, a preliminary noise reduction process may be performed to remove any unrelated or untargeted fields or terms, so that the object discovery process can focus on the targeted fields or objects. In one embodiment, the list of κ-objects 312 may include a list of noise κ-objects representing the noise objects, untargeted objects, or unrelated objects. For each of the fields identified from the file, the field is examined against any of the noise objects in the list to determine whether the field matches or is associated with any noise object. If one of the noise objects matches the fields, the field may be removed from the file, such that the subsequent object discovery process does not have to process the same field.

In one embodiment, as described above, there may be a noise hash table generated for the noise objects in the list. In response to a particular field, the field is fed into the hash table. The hash table outputs an indication whether any of the noise objects matches the field. In one embodiment, the hash table returns a pointer pointing to a particular noise object. The noise reduction module 304 then verifies that the field indeed matches the detailed attributes of the noise object, using noise reduction algorithm 316 of algorithms 315. The field may then be removed from the file after the verification process is successful.

After the noise reduction process has been performed, according to one embodiment, object scanning module 305 is configured to scan the file having the noise fields removed against the list of x-objects stored in the memory spaces set up by memory space configuration module 302. For each of the fields identified from the file, object scanning module 305 is configured to determine whether the field matches any of the κ-objects stored in the memory space using one or more OD algorithms 317 of algorithms 315.

In one embodiment, dependent upon the specific OD algorithms, for a particular field extracted from the file, a hash table is applied to the field to retrieve one or more pointers of one or more κ-objects. For each of the κ-objects retrieved, the detailed attributes of the κ-object are examined to determine whether the field includes data matching the attributes of the κ-object. If the field does not match with any of the κ-objects, the field may be inserted into a result list 320 and optionally a counter counting a number of occurrences of the matching κ-object is updated. The result list 320 is then transmitted back to OD controller 115. If there is no match, the field is considered as an unknown object and may be inserted a list of unknown objects for further analysis such as machine learning.

In one embodiment, for each of the κ-objects that matches the field, if an attribute of the κ-object has indicated that an enforcement policy has been configured to enabled, policy enforcement module 305 may retrieve the corresponding enforcement policy and perform certain enforcement actions against the file.

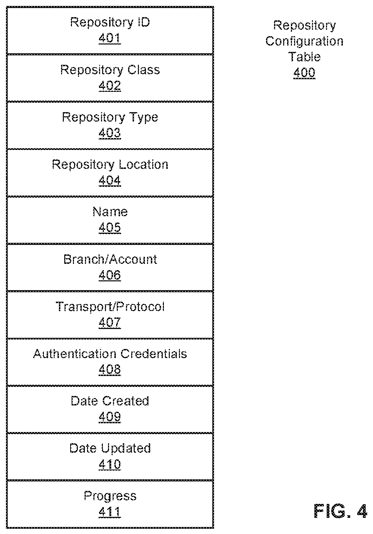

Figure 4 is a block diagram illustrating an example of a repository configuration data structure according to one embodiment. Referring to Figure 4, repository configuration data structure 400 may represent any of the repository configuration tables 311. In one embodiment, repository configuration table 400 includes, but is not limited to, identifier 401, repository class 402, repository type 403, storage location 404, name 405, branch 406, transport 407, authentication information 408, date created 409, date updated 410, and progress status 411 attributes. ID 401 uniquely identifies a repository configuration or setting associated with a particular OD task. Repository class specifies the transciency of the data contained and/or streamed through it such as (1) stationary data repository e.g. database, knowledgebase, document corpus, online storage, etc. (2) real-time streaming data source such as video, audio, text streams, etc. Repository type specifies the modality of the data items such as binary data, textual data, digital format, analog format etc.

Note that throughout this application, an OD task is performed on a data object or a file stored in a storage device for the purpose of illustration. However, the techniques described herein can also be applicable to other data sources, such as, for example, a database of unstructured documents, structured data from the database tables, or any other modality of data such as images, digital signal or analogue signals, real-time data streams.

Repository or storage location 404 may specify a directory or path of a particular storage location in which an OD task will be performed. Alternatively, repository location 404 may specify a network address such as a universal resource locator (URL) pointing to the storage location. Name 405 specify a name of the storage location, which may be displayed to a user via a user interface. Transport 407 may specify certain communications or storage access protocols that are required to access the storage location, such as network file systems, etc. Date created 409 stores the date of which the repository configuration was created and date updated 410 stores the last update date. Progress 411 indicates the status of the corresponding OD task such as a percentage of completion, etc.

In one embodiment, repository access module 301 is configured to access a storage location via the storage location specified in field 404. When repository access module 301 accesses the storage location, it utilizes the authentication information stored in field 408. The authentication information may include a username and a password, as well as the authentication type. As described above, repository configuration table 400 is created by OD controller 115 based on user configuration information received from a client device.

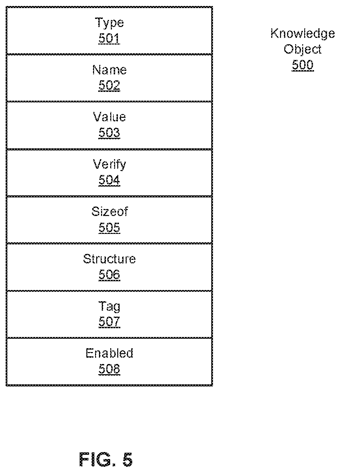

Figure 5 is a block diagram illustrating an example of a data structure representing a knowledge object according to one embodiment. κ-object 500 may represent any of the κ-objects 312 of Figure 312. Referring to Figure 5, in one embodiment, κ-object 500 includes, but is not limited to, type 501 name 502, value 503, verify 504, structure 506, tag 507, and enabled flag 508 attributes. Type attribute 501 uniquely identifies one of the multiple types of x-objects (e.g., basic, advance, complex). Name attribute 502 specifies a name of the corresponding κ-object. There may be multiple κ-objects with the same type, but with a different name.

In one embodiment, value attribute 503 stores a value or data pattern used to match a field extracted from a file. Value attribute 503 may store certain leading characters, numbers, or a combination of both. In another embodiment, value attribute 503 may store a finite state automaton (FSA), which when executed based on the field, indicates whether the field matches certain attributes of the corresponding κ-object. Dependent upon the specific type of a κ-object, verify attribute 504 may store a method or an algorithm to further verify that a particular field indeed matches the corresponding κ-object.

In one embodiment, the sizeof attribute 505 stores an expected size of at least a portion of a field to be matched. This is another attribute that can be utilized to match a field, just another level of a confirmation process. In one embodiment, value attribute 503 may include only the leading characters and the sizeof attribute 505 may specify the length of the subsequent characters, numbers, of a combination thereof.

In one embodiment, structure attribute 506 stores a value indicating a format or structure associated with the corresponding κ-object. For example, structure attribute 506 may indicate whether the κ-object is associated with an alpha, a numeric value, or an alphanumeric value. Tag attribute 507 may store a tag value indicating that the κ-object is associated with a particular class of κ-object (e.g., customer keyword, national ID, industry). Enabled attribute 508 may store an enabled flag indicating that an enforcement policy associated with the κ-object has been enabled. When enable attribute 508 is enabled, the system may perform an enforcement action according to a preconfigured enforcement policy, which may be specified in a policy table.

In one embodiment, an enforcement policy may specify an action to be performed in response to a field extracted from a file matching a particular κ-object. An enforcement action may be sending an alert to a predetermined destination device (e.g., an administrator). An enforcement action may modify an ownership of a file or an account of the file. An enforcement action may be restricting access to a file, a storage location, or an account, such as, for example, disabling printing or downloading a file, causing a link to a storage location expired, restricting sharing or viewing of a file, or revoking entire access of a file. An enforcement action may be performing quarantine on a file.

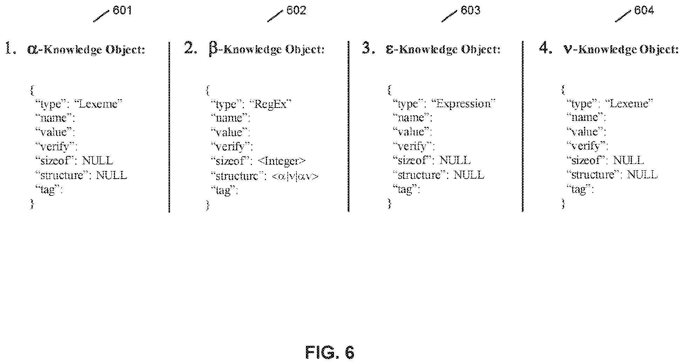

Figure 6 shows some data structures of knowledge objects according to certain embodiments of the invention. Referring to Figure 6, κ-objects 601-604 represent four different types of x-obj ects, however, more types of κ-objects may be applicable. These κ-objects are homogenous structures having the same number of attributes. However, dependent upon the type of a κ-object, meaning of the attributes and/or verification process may be different. κ-object 601 is referred as a basic κ-object (also referred to as an α-knowledge object or α-object) and it is a declarative κ-object. κ-object 602 is referred to as an advanced κ-object (also referred to as a β-knowledge object or β-object) and it is a behavioral κ-object. κ-object 603 is referred to as a complex κ-object (also referred to as an ε-knowledge object or ε-object), which may involve with one or more of κ-objects 601 and/or 602. κ-object 604 is utilized for noise reduction (also referred to as a v-knowledge object or v-object) and it contains a list of κ-objects 601.

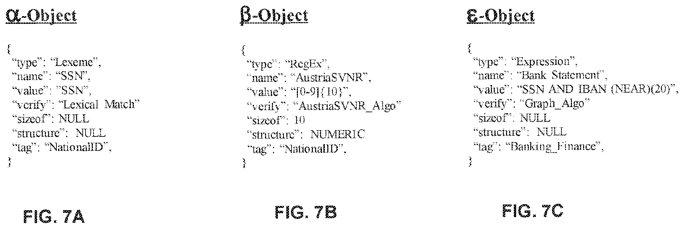

Figure 7A shows an example of κ-object 601. Specifically, in this example, the κ-object is a declarative κ-object to match a social security number (SSN). The value attribute specifies the leading characters "SSN" and the verify attribute specifies that the matching is for lexical matching, which is static marching. The tag attribute may further define a specific format that is expected when matching the value attribute. For example, in this example, since the value attribute is an SSN, the tag attribute may further define that the format of the SSN is compliant to a specific country or jurisdiction, since each country may have a different SSN format. This type of κ-objects does not require an executable algorithm to be executed to further verification.

Figure 7B shows an example of κ-object 602. Specifically, in this example, the value attribute specifies a finite state automaton (FSA) that can be executed for matching purpose. The structure attribute indicates that the data stored in the value attribute is a numeric value. The size or length of the value attribute is specified in the sizeof attribute. The verify attribute specifies a verification algorithm that is executed to further verify the matching of a field of the corresponding κ-object. The attributes of the κ-object may be sequentially examined and verified against a field to ensure that the field indeed matches the corresponding κ-object.

Figure 7C shows an example of κ-object 603, which is a complex κ-object. In one embodiment, the value attribute contains multiple values and a logical relationship between the values that need to be satisfied in order to match a particular field. In this example, the value attribute includes a first κ-object "SSN" and a second κ-object "IBSN (NEAR) (20)." The relationship between the first κ-object and the second κ-object is a logical AND. Thus, in order to match a particular field with a complex κ-object as shown in Figure 7C, the first κ-object "SSN" (e.g., κ-object 601) and the second κ-object "IBSN (NEAR) (20)" (e.g., κ-object 602) have to be satisfied. The logical relationship can also be a logical OR or logical XOR relationship.

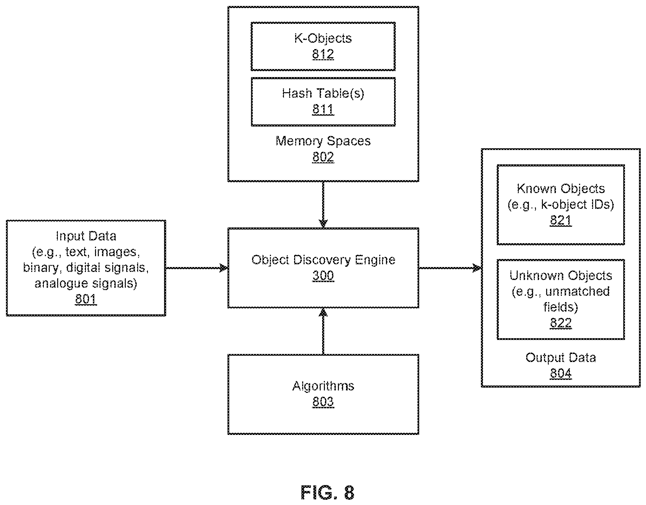

Figure 8 is a block diagram illustrating a processing flow of an object discovery process according to one embodiment. Referring to Figure 8, in response to a set of input data 801, ODE 300 determines a set of fields from the input data based on an analysis of the input data 801. For each of the fields extracted from input data 801, ODE 300 applies an object hash table 811 to the field. Hash table 811 has been created for each set of κ-objects of different types 812. The hash table 811 and the κ-objects 812 have been populated in the memory spaces 802 of the system, such as main memory (e.g., random access memory or RAM, a processor memory within a process, a cache memory, etc.).

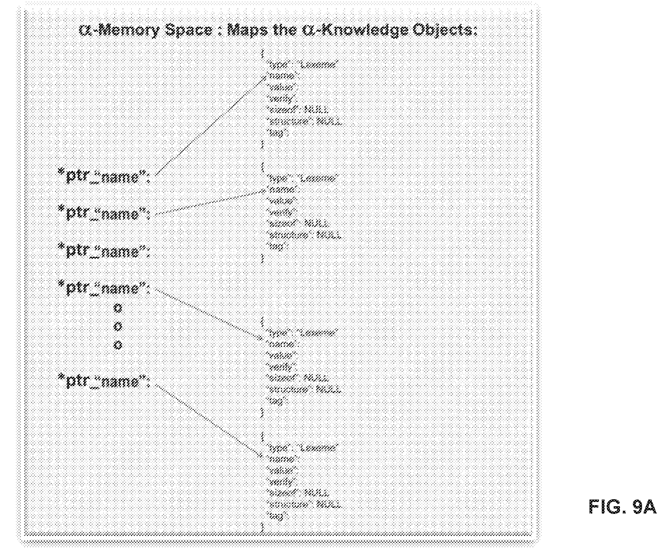

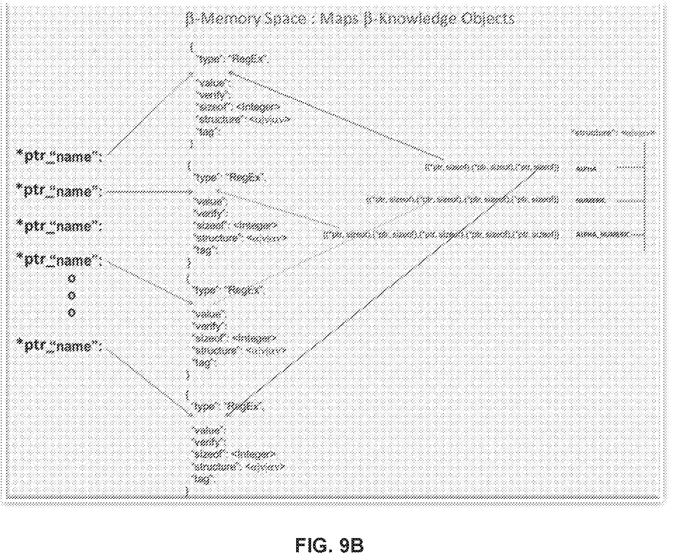

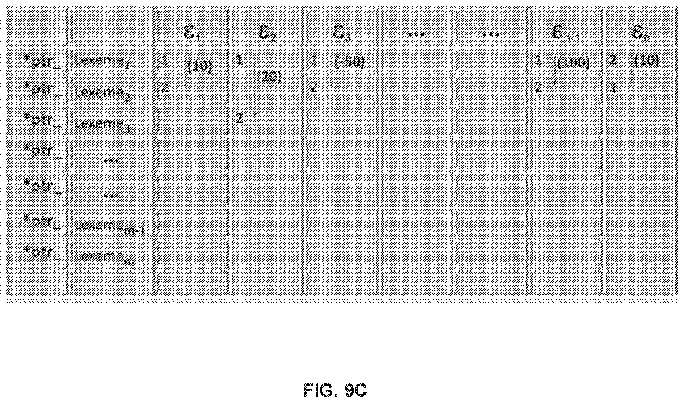

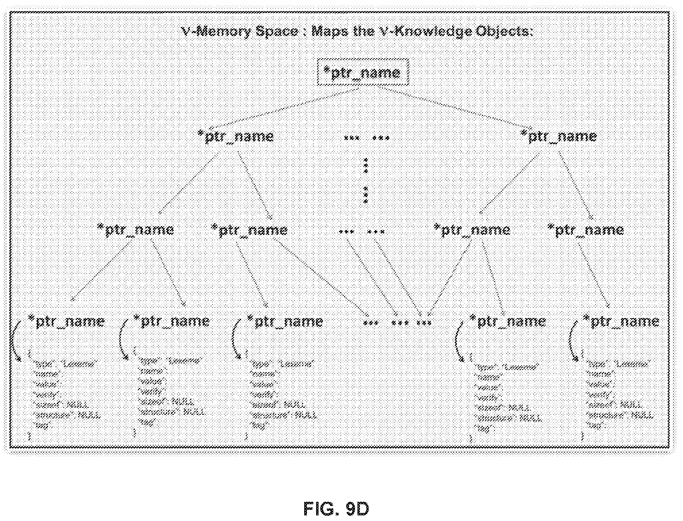

In one embodiment, each type of κ-objects may be populated into a specific memory space and a hash table is created to represent the κ-objects of that particular type. Thus, for the four types of x-obj ects as shown in Figure 6, there are at least four memory spaces are created and at least four hash tables may be created. Figure 9A shows an example of a memory space associated with the κ-objects of type 601 of Figure 6. Figure 9B shows an example of a memory space associated with the κ-objects of type 602 of Figure 6. Figure 9C shows an example of a memory space associated with the κ-objects of type 603 of Figure 6. Figure 9D shows an example of a memory space associated with the κ-objects of type 604 of Figure 6.

In one embodiment, hash table 811 returns one or more pointers pointing to one or more of x-objects 812. For each of the κ-objects returned from hash table 811, ODE 300 performs the matching operations against each field extracted from input data 801, including matching or executing an FSA specified in the value attribute and executing a verification function specified in the verify attribute of the κ-object using one or more verification algorithms 803. If it is determined that the field matches a particular κ-object, the κ-object or its object ID may be inserted into result or output 804 as part of κ-objects 821. If there is no match, the field may be inserted into the result 804 as part of unknown objects 822.

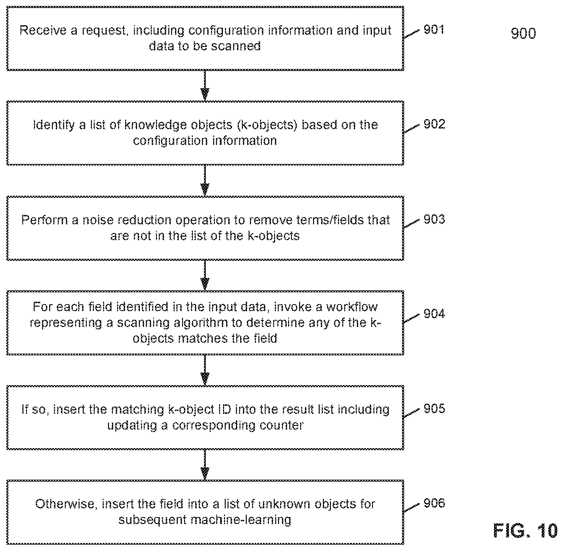

Figure 10 is a flow diagram illustrating an example of a process for object discovery according to one embodiment. Process 900 may be performed by processing logic, which may include software, hardware, or a combination thereof. For example, process 900 may be performed by ODE 300. Referring to Figure 10, at block 901, processing logic receives a request including configuration information of object discovery. The request may be received from an OD controller, including a repository configuration information, a set of x-objects (or their object identifiers) associated with the OD discover task, and one or more verification algorithms (or their algorithm identifiers). The configuration information may be compiled by the OD controller in response to user data received from a user via a user interface at an OD management server.

In response to the request, at block 902, processing logic identifies a list of κ-objects based on the configuration information. The κ-objects may include one or more κ-objects that are associated with any of the κ-objects of different types as shown in Figure 6. At block 903, processing logic optionally performs a noise reduction operation to remove certain terms or fields of an input file that are not listed in the κ-objects of the list. This operation may be performed by applying a hash table of a list of unwanted objects to the terms, where the hash table returns an indication indicating whether the particular term is specified in the list of unwanted objects. If so, the term or field of the input file may be removed.

At block 904, for each of the fields identified from the input data, processing logic invokes a workflow representing a scanning algorithm to determine any of the κ-objects in the list that marches the field. The workflow may include one or more workflow stages and each workflow stage may include operations of matching the field against a κ-object or an attribute of a κ-object. If there is a matching κ-object, at block 905, at least the object identifiers of the matching κ-objects may be inserted into a result list as a part of known objects. Otherwise, at block 906, the fields without matching are inserted into a list of unknown objects.

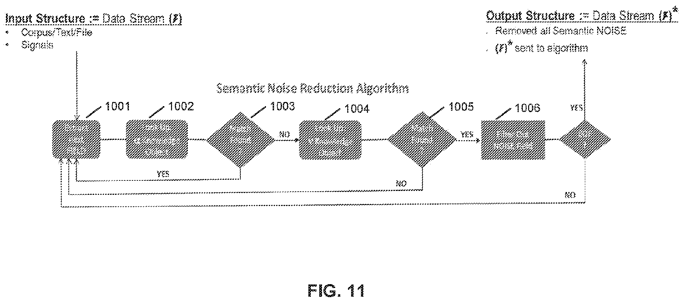

Figure 11 is a flow diagram illustrating an example of a process of noise reduction according to one embodiment. Process 1000 may be performed as a part of operations of block 903, which may be performed by processing logic that may include software, hardware, or a combination thereof. Referring to Figure 11, at block 1001, processing logic extracts a field from content of input data (e.g., a file, signals). At block 1002, processing logic performs a lookup operation based on the field in a first list of κ-objects to determine whether the field matches any of the κ-objects in the first list. In one embodiment, the processing logic may simply apply a hash table of the κ-objects in the first list to the field. The output of the hash table indicates whether at least one of the κ-objects matches the field. Alternatively, the hash table returns a pointer of a κ-object. The processing logic then matches the field against at least some of the attributes of the κ-object as described above to determine the field indeed matches the κ-object.

In one embodiment, the κ-objects of the first list are the declarative objects associated with type 601. This operation is an optional operation, which can quickly determine whether the field extracted from the input data is one of the target fields to be further examined. If it is, such a field is not a noise field. As a result, the subsequent noise screening operations can be skipped. If there is a match determined at block 1003, the process resets and a next field is extracted from the input data. If the field does not match any of the κ-objects in the first list, at block 1004, the processing logic matches the field against a second list of x-objects. The κ-objects of the second list may be compatible with those κ-objects associated with type 604. If the field does not match any of the κ-objects in the second list, the next field will be examined. If there is a match, the field may be considered as a noise object, and at block 1006, the field is removed from the input data. The above process is iteratively performed until the end of the input data is reached. The input data with the noise objects removed is then examined using one or more screening or matching algorithms, such as, for example, based on a third list of κ-objects of types 602 and/or 603.

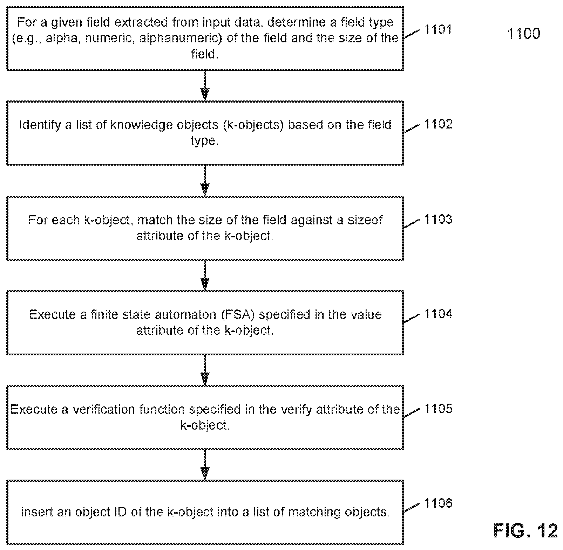

Figure 12 is a flow diagram illustrating a process of object discovery according to another embodiment. Process 1100 may be performed as a part of block 904 or a subsequent process of Figure 11, which may be performed by processing logic implemented in software, hardware, or a combination thereof. Specifically, process 1100 may be performed to determine whether a particular field matches any of the κ-objects of type 602. Referring to Figure 12, at block 1101, for a given field obtained from the input data, a field type of the field is determined and the size of the field. The processing logic may call a predetermined function based on the field to determine whether the field type is alpha, numeric, or alphanumeric, as well as the size or length of the field.

At block 1102, processing logic obtains a list of κ-objects based on the field type of the field. In one embodiment, processing logic applies a predetermined hash function to the field type of the field. The hash function returns one or more memory pointers pointing to one or more κ-objects populated in a memory space of the corresponding type of x-objects.

At block 1103, for each of the κ-objects in the list, processing logic matches the size of the field against the sizeof attribute of the κ-object. If the size of the field does not match the sizeof attribute of the κ-object, at block 1107, the field is inserted into a list of unknown objects.

If the size of the field matches the sizeof attribute of the κ-object, at block 1104, the processing logic executes a finite state automaton (FSA) specified in the value attribute of the κ-object. If the execution of the FSA is unsuccessful, at block 1107, the field is inserted into the list of unknown objects. If the execution of the FSA is successful, at block 1105, a verification function specified in the verify attribute of the κ-object is executed. If the execution of the verification function is successful, at block 1106, an object identifier of the κ-object is inserted into a list of known objects in the result list. Otherwise, at block 1107, the field is inserted in to the list of unknown objects.

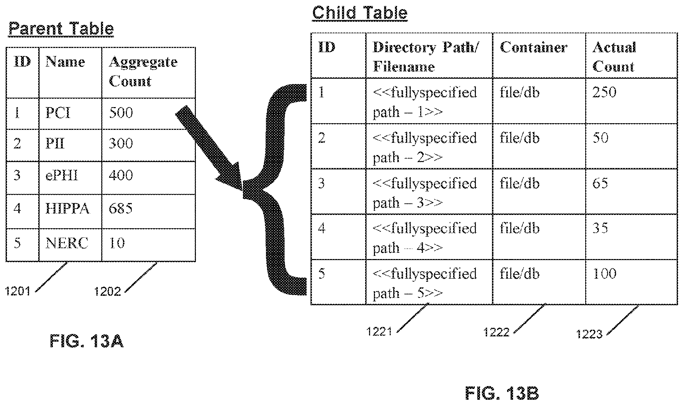

Figure 13A shows an example of a result list according to one embodiment. Referring to Figure 13A, the result list 1200 includes a list of κ-objects 1201 and a number of matching occurred 1202. For some of the matching entries, there may be a child table linked with the entry as shown in Figure 13B. Referring to Figure 13B, the child table 1220 includes the storage location or path 1221 of the input data, a data container of the input data 1222, such as filenames or database names, and their corresponding number of occurrence 1223.

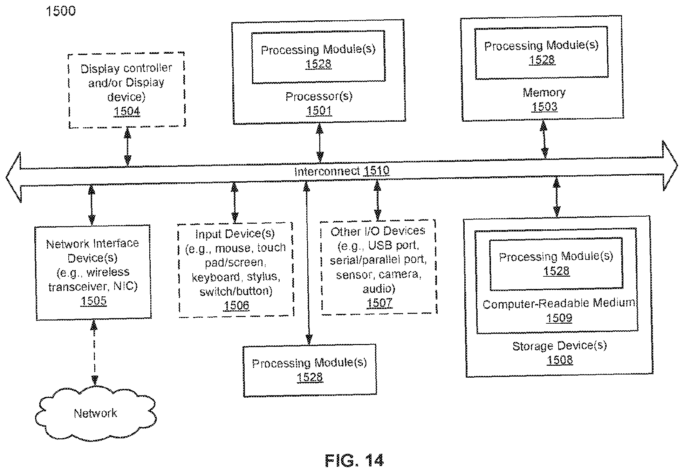

Figure 14 is a block diagram illustrating an example of a data processing system which may be used with one embodiment of the invention. For example, system 1500 may represent any of data processing systems described above performing any of the processes or methods described above, such as, for example, a client device or a server described above, such as, for example, client devices 101-102, OD management server 103 or any of OD engines 104, as described above.

System 1500 can include many different components. These components can be implemented as integrated circuits (ICs), portions thereof, discrete electronic devices, or other modules adapted to a circuit board such as a motherboard or add-in card of the computer system, or as components otherwise incorporated within a chassis of the computer system.

Note also that system 1500 is intended to show a high level view of many components of the computer system. However, it is to be understood that additional components may be present in certain implementations and furthermore, different arrangement of the components shown may occur in other implementations. System 1500 may represent a desktop, a laptop, a tablet, a server, a mobile phone, a media player, a personal digital assistant (PDA), a Smartwatch, a personal communicator, a gaming device, a network router or hub, a wireless access point (AP) or repeater, a set-top box, or a combination thereof. Further, while only a single machine or system is illustrated, the term "machine" or "system" shall also be taken to include any collection of machines or systems that individually or jointly execute a set (or multiple sets) of instructions to perform any one or more of the methodologies discussed herein.

In one embodiment, system 1500 includes processor 1501, memory 1503, and devices 1505-1508 via a bus or an interconnect 1510. Processor 1501 may represent a single processor or multiple processors with a single processor core or multiple processor cores included therein. Processor 1501 may represent one or more general-purpose processors such as a microprocessor, a central processing unit (CPU), or the like. More particularly, processor 1501 may be a complex instruction set computing (CISC) microprocessor, reduced instruction set computing (RISC) microprocessor, very long instruction word (VLIW) microprocessor, or processor implementing other instruction sets, or processors implementing a combination of instruction sets. Processor 1501 may also be one or more special-purpose processors such as an application specific integrated circuit (ASIC), a cellular or baseband processor, a field programmable gate array (FPGA), a digital signal processor (DSP), a network processor, a graphics processor, a network processor, a communications processor, a cryptographic processor, a co-processor, an embedded processor, or any other type of logic capable of processing instructions.

Processor 1501, which may be a low power multi-core processor socket such as an ultra-low voltage processor, may act as a main processing unit and central hub for communication with the various components of the system. Such processor can be implemented as a system on chip (SoC). Processor 1501 is configured to execute instructions for performing the operations and steps discussed herein. System 1500 may further include a graphics interface that communicates with optional graphics subsystem 1504, which may include a display controller, a graphics processor, and/or a display device.

Processor 1501 may communicate with memory 1503, which in one embodiment can be implemented via multiple memory devices to provide for a given amount of system memory. Memory 1503 may include one or more volatile storage (or memory) devices such as random access memory (RAM), dynamic RAM (DRAM), synchronous DRAM (SDRAM), static RAM (SRAM), or other types of storage devices. Memory 1503 may store information including sequences of instructions that are executed by processor 1501, or any other device. For example, executable code and/or data of a variety of operating systems, device drivers, firmware (e.g., input output basic system or BIOS), and/or applications can be loaded in memory 1503 and executed by processor 1501. An operating system can be any kind of operating systems, such as, for example, Windows^{®} operating system from Microsoft^{®}, Mac OS^{®}/iOS^{®} from Apple, Android^{®} from Google^{®}, Linux^{®}, Unix^{®}, or other real-time or embedded operating systems such as VxWorks.

System 1500 may further include IO devices such as devices 1505-1508, including network interface device(s) 1505, optional input device(s) 1506, and other optional IO device(s) 1507. Network interface device 1505 may include a wireless transceiver and/or a network interface card (NIC). The wireless transceiver may be a WiFi transceiver, an infrared transceiver, a Bluetooth transceiver, a WiMax transceiver, a wireless cellular telephony transceiver, a satellite transceiver (e.g., a global positioning system (GPS) transceiver), or other radio frequency (RF) transceivers, or a combination thereof. The NIC may be an Ethernet card.

Input device(s) 1506 may include a mouse, a touch pad, a touch sensitive screen (which may be integrated with display device 1504), a pointer device such as a stylus, and/or a keyboard (e.g., physical keyboard or a virtual keyboard displayed as part of a touch sensitive screen). For example, input device 1506 may include a touch screen controller coupled to a touch screen. The touch screen and touch screen controller can, for example, detect contact and movement or break thereof using any of a plurality of touch sensitivity technologies, including but not limited to capacitive, resistive, infrared, and surface acoustic wave technologies, as well as other proximity sensor arrays or other elements for determining one or more points of contact with the touch screen.

IO devices 1507 may include an audio device. An audio device may include a speaker and/or a microphone to facilitate voice-enabled functions, such as voice recognition, voice replication, digital recording, and/or telephony functions. Other IO devices 1507 may further include universal serial bus (USB) port(s), parallel port(s), serial port(s), a printer, a network interface, a bus bridge (e.g., a PCI-PCI bridge), sensor(s) (e.g., a motion sensor such as an accelerometer, gyroscope, a magnetometer, a light sensor, compass, a proximity sensor, etc.), or a combination thereof. Devices 1507 may further include an imaging processing subsystem (e.g., a camera), which may include an optical sensor, such as a charged coupled device (CCD) or a complementary metal-oxide semiconductor (CMOS) optical sensor, utilized to facilitate camera functions, such as recording photographs and video clips. Certain sensors may be coupled to interconnect 1510 via a sensor hub (not shown), while other devices such as a keyboard or thermal sensor may be controlled by an embedded controller (not shown), dependent upon the specific configuration or design of system 1500.

To provide for persistent storage of information such as data, applications, one or more operating systems and so forth, a mass storage (not shown) may also couple to processor 1501. In various embodiments, to enable a thinner and lighter system design as well as to improve system responsiveness, this mass storage may be implemented via a solid state device (SSD). However, in other embodiments, the mass storage may primarily be implemented using a hard disk drive (HDD) with a smaller amount of SSD storage to act as a SSD cache to enable non-volatile storage of context state and other such information during power down events so that a fast power up can occur on re-initiation of system activities. Also a flash device may be coupled to processor 1501, e.g., via a serial peripheral interface (SPI). This flash device may provide for non-volatile storage of system software, including a basic input/output software (BIOS) as well as other firmware of the system.

Storage device 1508 may include computer-accessible storage medium 1509 (also known as a machine-readable storage medium or a computer-readable medium) on which is stored one or more sets of instructions or software (e.g., module, unit, and/or logic 1528) embodying any one or more of the methodologies or functions described herein. Processing module/unit/logic 1528 may represent any of the components described above, such as, for example, an OD controller or an OD engine as described above. Processing module/unit/logic 1528 may also reside, completely or at least partially, within memory 1503 and/or within processor 1501 during execution thereof by data processing system 1500, memory 1503 and processor 1501 also constituting machine-accessible storage media. Processing module/unit/logic 1528 may further be transmitted or received over a network via network interface device 1505.

Computer-readable storage medium 1509 may also be used to store some software functionalities described above persistently. While computer-readable storage medium 1509 is shown in an exemplary embodiment to be a single medium, the term "computer-readable storage medium" should be taken to include a single medium or multiple media (e.g., a centralized or distributed database, and/or associated caches and servers) that store the one or more sets of instructions. The terms "computer-readable storage medium" shall also be taken to include any medium that is capable of storing or encoding a set of instructions for execution by the machine and that cause the machine to perform any one or more of the methodologies of the present invention. The term "computer-readable storage medium" shall accordingly be taken to include, but not be limited to, solid-state memories, and optical and magnetic media, or any other non-transitory machine-readable medium.

Processing module/unit/logic 1528, components and other features described herein can be implemented as discrete hardware components or integrated in the functionality of hardware components such as ASICS, FPGAs, DSPs or similar devices. In addition, processing module/unit/logic 1528 can be implemented as firmware or functional circuitry within hardware devices. Further, processing module/unit/logic 1528 can be implemented in any combination hardware devices and software components.

Note that while system 1500 is illustrated with various components of a data processing system, it is not intended to represent any particular architecture or manner of interconnecting the components; as such details are not germane to embodiments of the present invention. It will also be appreciated that network computers, handheld computers, mobile phones, servers, and/or other data processing systems which have fewer components or perhaps more components may also be used with embodiments of the invention.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The techniques shown in the figures can be implemented using code and data stored and executed on one or more electronic devices. Such electronic devices store and communicate (internally and/or with other electronic devices over a network) code and data using computer-readable media, such as non-transitory computer-readable storage media (e.g., magnetic disks; optical disks; random access memory; read only memory; flash memory devices; phase-change memory) and transitory computer-readable transmission media (e.g., electrical, optical, acoustical or other form of propagated signals - such as carrier waves, infrared signals, digital signals).

The processes or methods depicted in the preceding figures may be performed by processing logic that comprises hardware (e.g. circuitry, dedicated logic, etc.), firmware, software (e.g., embodied on a non-transitory computer readable medium), or a combination of both. Although the processes or methods are described above in terms of some sequential operations, it should be appreciated that some of the operations described may be performed in a different order. Moreover, some operations may be performed in parallel rather than sequentially.

In the foregoing specification, embodiments of the invention have been described with reference to specific exemplary embodiments thereof.

## Claims

1. A computer-implemented method for identifying object stored in a storage device, the method comprising:
receiving, at an object discovery engine executed by a processor, a request from an object discovery controller over a network for identifying one or more objects of input data;
analyzing the input data to determine a list of a plurality of fields as a part of content of the input data using a predetermined field identification analysis;
determining a first list of knowledge objects based on the request, each of the knowledge objects of the first list corresponding to one of a plurality of data type categories, wherein each of the knowledge objects includes, a value attribute to specify matching data to match a field associated with an information object,
a verify attribute to specify a method to verify the field of the information object, and
a tag attribute to specify one of a plurality of formats associated with the matching data stored in the value attribute;
for each of the fields identified in the list of fields, matching and verifying the field against each of the knowledge objects of the first list of knowledge objects to determine whether the field matches the knowledge object, including matching the field against a value stored in the value attribute and a format
specified by the tag attribute of the knowledge object, verifying the field using a predetermined verification method specified in
the verify attribute of the knowledge object, and
if the field has been matched and verified against a knowledge object, inserting an object identifier (ID) of the matched knowledge object into a result list; and
transmitting the result list to the object discovery controller over the network.

2. The method of claim 1, wherein matching and verifying the field against each of the knowledge objects further comprises: identifying a first set of one or more knowledge objects of a first type from the
plurality of knowledge objects in the first list of knowledge objects; and for each of the knowledge objects in the first set,
determining whether the field contains one or more leading values matching the values specified in the value attribute of the knowledge object,
determining whether a format of subsequent values of the field matching a format associated with a tag value specified in the tag attribute of the knowledge object, and
inserting the object identifier of the knowledge object into the result list, in response to determining that the field matches the value of the value attribute and the format specified in the tag attribute of the knowledge object.

3. The method of claim 1, wherein matching and verifying the field against each of the knowledge objects further comprises:
identifying a second set of one or more knowledge objects of a second type from the plurality of knowledge objects in the first list of knowledge objects;
determining a field type of the field; and
matching the field type of the field against a structure attribute of each of the knowledge objects to identify a subset of the knowledge objects as matching knowledge object candidates.

4. The method of claim 3, wherein the field type of the field is one of an alpha, a numeric, or an alphanumeric.

5. The method of claim 3, further comprising:
determining a size of the field;
matching the size of the field against a size stored in a sizeof attribute of the knowledge object; and
inserting the field into a list of unknown objects if the size of the field does not match the size of the sizeof attribute.

6. The method of claim 5, further comprising:
executing a finite state automaton (FSA) as a part of the data stored in the value attribute of the knowledge object, in response to determining that the size of the field matches the size of the sizeof attribute of the knowledge object; and
inserting the field into a list of unknown objects if the execution of the FSA is not successful.

7. The method of claim 6, further comprising:
executing the predetermined verification method specified in the verify attribute of the knowledge object, in response to determining that the execution of the FSA matches a predetermined condition;
inserting the object ID of the knowledge object into the result list, in response to determining that the execution of the predetermined verification method is successful; and
otherwise inserting the field into the list of unknown objects.

8. The method of claim 6, further comprising performing a machine learning process on the list of unknown objects for subsequent classification of the unknown objects.

9. The method of claim 1, further comprising:
prior to matching and verifying the field against each of the knowledge objects in the first list of knowledge objects,
for each of the fields determined from the input data,
matching the field against each of a plurality of the noise knowledge objects in a list of noise knowledge objects, and
in response to determining that the field matches at least one of the noise knowledge objects, removing the field from the input data.

10. The method of claim 1, further comprising:
receiving repository configuration information from the object discovery controller, the repository configuration information including a link to a storage location of the input data;
determining a communication protocol from the repository configuration information; and
accessing the storage location via the link to retrieve the input data from the storage location using the communication protocol.

11. The method of claim 10, further comprising:
extracting authentication information from the repository configuration information, including a username and a password; and
performing an authentication process based on the username and password to gain access rights to the storage location.

12. The method of claim 2, further comprising:
determining whether an enforcement policy has been enabled based on a policy enabled attribute of the knowledge object;
retrieving an enforcement policy associated with the knowledge object, in response to determining that the enforcement policy has been enabled; and
performing at least one enforcement action with respect to the input data stored in the storage location based on the enforcement policy,
at least some of the knowledge objects comprise a policy enable attribute, the policy enable attribute specifying an enforcement policy associated with the given knowledge object.

13. The method of claim 12, wherein the at least one enforcement action comprises at least one of:
modifying an ownership of the input data,
encrypting the input data,
restricting access to the input data, or
sending an alert to a predetermined destination device, and wherein restricting access to the input data comprises at least one of:
disabling printing or downloading the input data,
disabling an account associated with the input data,
performing quarantine of the input data,
restricting sharing or viewing of the input data, or
revoking access rights of the input data.

14. A non-transitory machine-readable medium having instructions stored therein, which when executed by a processor, cause the processor to perform the method of any one of claims 1-13.

15. A data processing system, comprising:
a processor; and
a memory coupled to the processor to store instructions, which when executed by the processor, cause the processor to perform the method of any one of claims 1-13.

## Patentansprüche

1. Computerimplementiertes Verfahren zur Identifizierung von Objekten, die in einer Speicherungsvorrichtung gespeichert sind, das Verfahren umfassend:
Empfangen, an einer von einem Prozessor ausgeführten Object-Discovery-Engine, einer Anfrage von einem Object-Discovery-Controller über ein Netzwerk zur Identifizierung eines oder mehrerer Objekte von Eingabedaten;
Analysieren der Eingabedaten, um mithilfe einer vorbestimmten Feldidentifizierungsanalyse eine Liste einer Vielzahl von Feldern als Teil des Inhalts der Eingabedaten zu ermitteln;
Ermitteln einer ersten Liste von Wissensobjekten basierend auf der Anfrage, wobei jedes der Wissensobjekte der ersten Liste einer von einer Vielzahl von Datentypkategorien entspricht, wobei jedes der Wissensobjekte Folgendes einschließt:
ein Wertattribut, um Abgleichdaten zum Abgleichen eines einem Informationsobjekt zugeordneten Feldes zu spezifizieren,
ein Verifizierungsattribut, um ein Verfahren zum Verifizieren des Feldes des Informationsobjekts zu spezifizieren, und
ein "Tag"-Attribut, um eines von einer Vielzahl von Formaten zu spezifizieren, die den in dem Wertattribut gespeicherten Abgleichdaten zugeordnet sind;
für jedes der in der Liste von Feldern identifizierten Felder, Abgleichen und
Verifizieren des Feldes mit jedem der Wissensobjekte der ersten Liste von Wissensobjekten, um zu ermitteln, ob das Feld mit dem Wissensobjekt übereinstimmt, einschließlich
Abgleichen des Feldes mit einem in dem Verifizierungsattribut gespeicherten Wert und einem durch das "Tag"-Attribut des Wissensobjekts spezifiziertem Format,
Verifizieren des Feldes unter Verwendung eines vorbestimmten Verifizierungsverfahrens, das in dem Verifizierungsattribut des Wissensobjekts spezifiziert ist, und
wenn das Feld mit einem Wissensobjekt abgeglichen und verifiziert wurde, Einfügen einer Objektkennung (ID) des abgeglichenen Wissensobjekts in eine Ergebnisliste; und
Übermitteln der Ergebnisliste über das Netzwerk an den Object-Discovery-Controller.

2. Verfahren nach Anspruch 1, wobei das Abgleichen und Verifizieren des Feldes mit jedem der Wissensobjekte ferner Folgendes umfasst:
Identifizieren einer ersten Menge von einem oder mehreren Wissensobjekten eines ersten Typs aus der Vielzahl von Wissensobjekten in der ersten Liste von Wissensobjekten; und
für jedes der Wissensobjekte in der ersten Menge,
Ermitteln, ob das Feld einen oder mehrere führende Werte enthält, die mit den in dem Wertattribut des Wissensobjekts spezifizierten Werten übereinstimmen,
Ermitteln, ob ein Format von nachfolgenden Werten des Feldes mit einem Format übereinstimmt, das einem in dem "Tag"-Attribut des Wissensobjekts spezifizierten "Tag"-Wert zugeordnet ist, und
Einfügen der Objektkennung des Wissensobjekts in die Ergebnisliste, nachdem ermittelt wurde, dass das Feld mit dem Wert des Wertattributs und dem in dem "Tag"-Attribut des Wissensobjekts spezifizierten Format übereinstimmt.

3. Verfahren nach Anspruch 1, wobei das Abgleichen und Verifizieren des Feldes mit jedem der Wissensobjekte ferner Folgendes umfasst:
Identifizieren einer zweiten Menge von einem oder mehreren Wissensobjekten eines zweiten Typs aus der Vielzahl von Wissensobjekten in der ersten Liste von Wissensobjekten;
Ermitteln eines Feldtyps des Feldes; und
Abgleichen des Feldtyps des Feldes mit einem Strukturattribut von jedem der Wissensobjekte, um eine Teilmenge der Wissensobjekte als übereinstimmende Wissensobjekt-Kandidaten zu identifizieren.

4. Verfahren nach Anspruch 3, wobei der Feldtyp des Feldes einer von einem alpha, einem numerischen oder einem alphanumerischen ist.

5. Verfahren nach Anspruch 3, ferner umfassend:
Ermitteln einer Größe des Feldes;
Abgleichen der Größe des Feldes mit einer Größe, die in einem "sizeof"-Attribut des Wissensobjekts gespeichert ist; und
Einfügen des Feldes in eine Liste von unbekannten Objekten, wenn die Größe des Feldes nicht mit der Größe des "sizeof"-Attributs übereinstimmt.

6. Verfahren nach Anspruch 5, ferner umfassend:
Ausführen eines endlichen Automaten (finite state automaton, FSA) als Teil der in dem Wertattribut des Wissensobjekts gespeicherten Daten, nachdem ermittelt wurde, dass die Größe des Feldes mit der Größe des "sizeof"-Attributs des Wissensobjekts übereinstimmt; und
Einfügen des Feldes in eine Liste von unbekannten Objekten, wenn die Ausführung des FSA nicht erfolgreich ist.

7. Verfahren nach Anspruch 6, ferner umfassend:
Ausführen des in dem Verifizierungsattribut des Wissensobjekts spezifizierten vorbestimmten Verifizierungsverfahrens, nachdem ermittelt wurde, dass die Ausführung des FSA mit einer vorbestimmten Bedingung übereinstimmt;
Einfügen der Objektkennung des Wissensobjekts in die Ergebnisliste, nachdem ermittelt wurde, dass die Ausführung des vorbestimmten Verifizierungsverfahrens erfolgreich war; und
andernfalls Einfügen des Feldes in die Liste von unbekannten Objekten.

8. Verfahren nach Anspruch 6, ferner umfassend das Durchführen eines maschinellen Lernprozesses an der Liste von unbekannten Objekten zur anschließenden Klassifizierung der unbekannten Objekte.

9. Verfahren nach Anspruch 1, ferner umfassend:
vor dem Abgleichen und Verifizieren des Feldes mit jedem der Wissensobjekte in der ersten Liste von Wissensobjekten,
für jedes der aus den Eingabedaten ermittelten Felder,
Abgleichen des Feldes mit jedem von einer Vielzahl von Rauschwissensobjekten in einer Liste von Rauschwissensobjekten, und
nachdem ermittelt wurde, dass das Feld mit mindestens einem der Rauschwissensobjekte übereinstimmt, Entfernen des Feldes aus den Eingabedaten.

10. Verfahren nach Anspruch 1, ferner umfassend:
Empfangen von Repository-Konfigurationsinformationen von dem Object-Discovery-Controller, wobei die Repository-Konfigurationsinformationen einen Link zu einem Speicherungsort der Eingabedaten einschließen;
Ermitteln eines Kommunikationsprotokolls anhand der Repository-Konfigurationsinformationen; und
Zugreifen auf den Speicherungsort über den Link, um die Eingabedaten mithilfe des Kommunikationsprotokolls von dem Speicherungsort abzurufen.

11. Verfahren nach Anspruch 10, ferner umfassend:
Extrahieren von Authentifizierungsinformationen aus den Repository-Konfigurationsdaten, einschließlich eines Benutzernamens und eines Passworts; und
Durchführen eines Authentifizierungsprozesses basierend auf dem Benutzernamen und dem Passwort, um Zugriffsrechte auf den Speicherungsort zu erhalten.

12. Verfahren nach Anspruch 2, ferner umfassend:
Ermitteln, ob eine Durchsetzungsrichtlinie aktiviert wurde, basierend auf einem "Richtlinie-aktiviert"-Attribut des Wissensobjekts;
Abrufen einer dem Wissensobjekt zugeordneten Durchsetzungsrichtlinie, nachdem ermittelt wurde, dass die Durchsetzungsrichtlinie aktiviert wurde; und
Durchführen mindestens einer Durchsetzungsmaßnahme in Bezug auf die an dem Speicherungsort gespeicherten Eingabedaten basierend auf der Durchsetzungsrichtlinie,
mindestens einige der Wissensobjekte umfassen ein "Richtlinie-aktiviert"-Attribut, wobei das "Richtlinie-aktiviert"-Attribut eine Durchsetzungsrichtlinie spezifiziert, die dem gegebenen Wissensobjekt zugeordnet ist.

13. Verfahren nach Anspruch 12, wobei die mindestens eine Durchsetzungsmaßnahme mindestens eines umfasst von:
Modifizieren eines Eigentumsverhältnisses der Eingabedaten,
Verschlüsseln der Eingabedaten,
Einschränken des Zugriffs auf die Eingabedaten, oder
Senden einer Benachrichtigung an eine vorbestimmte Zielvorrichtung, und
wobei das Einschränken des Zugriffs auf die Eingabedaten mindestens eines umfasst von:
Deaktivieren des Druckens oder Herunterladens der Eingabedaten, Deaktivieren eines Kontos, das den Eingabedaten zugeordnet ist, Unter-Quarantäne-Stellen der Eingabedaten,
Einschränken des Teilens oder Einsehens der Eingabedaten, oder Widerrufen von Zugriffsrechten auf die Eingabedaten.

14. Nichtflüchtiges maschinenlesbares Medium, auf dem Anweisungen gespeichert sind, die, wenn sie von einem Prozessor ausgeführt werden, den Prozessor veranlassen, das Verfahren nach einem der Ansprüche 1 bis 13 durchzuführen.

15. Datenverarbeitungssystem, umfassend:
einen Prozessor; und
einen mit dem Prozessor gekoppelten Speicher zum Speichern von Anweisungen, die, wenn sie von dem Prozessor ausgeführt werden, den Prozessor veranlassen, das Verfahren nach einem der Ansprüche 1 bis 13 durchzuführen.

## Revendications

1. Procédé implémenté par ordinateur destiné à identifier des objets stockés dans une unité de stockage, le procédé consistant à :
recevoir, à hauteur d'un moteur de découverte d'objets exécuté par un processeur, une demande émanant d'un contrôleur de découverte d'objets sur un réseau afin d'identifier un ou plusieurs objets de données d'entrée ;
analyser les données d'entrée pour déterminer une liste d'une pluralité de champs en tant que partie intégrante du contenu des données d'entrée, en procédant à une analyse d'identification de champ prédéterminée ;
déterminer une première liste d'objets de savoir en fonction de la demande, chaque objet de savoir de la première liste correspondant à l'une des catégories d'une pluralité de catégories de types de donnée, dans lequel chaque objet de savoir intègre :
un attribut de valeur permettant de définir des données de correspondance devant correspondre à un champ associé à un objet d'information,
un attribut de vérification permettant de définir un procédé destiné à vérifier le champ de l'objet d'information, et
un attribut d'étiquette permettant de définir un format d'une pluralité de formats associés aux données de correspondance stockées dans l'attribut de valeur ;
concernant chaque champ identifié dans la liste de champs, mettre en correspondance et vérifier le champ par rapport à chaque objet de savoir de la première liste d'objets de savoir, afin de déterminer si ledit champ correspond à l'objet de savoir, y compris
mettre en correspondance le champ par rapport à une valeur stockée dans l'attribut de valeur et à un format défini par l'attribut d'étiquette de l'objet de savoir,
vérifier le champ en appliquant un procédé de vérification prédéterminé défini dans l'attribut de vérification de l'objet de savoir, et
si le champ a été mis en correspondance et vérifié par rapport à un objet de savoir, insérer un identifiant d'objet (ID) de l'objet de savoir mis en correspondance dans une liste de résultats ; et
communiquer la liste de résultats au contrôleur de découverte d'objets sur le réseau.

2. Procédé selon la revendication 1, dans lequel la mise en correspondance et la vérification du champ par rapport à chaque objet de savoir consistent en outre à :
identifier un premier ensemble d'un ou de plusieurs objets de savoir d'un premier type parmi la pluralité d'objets de savoir figurant dans la première liste d'objets de savoir ; et
concernant chaque objet de savoir compris dans le premier ensemble,
déterminer si le champ contient une ou plusieurs valeurs de tête qui correspondent aux valeurs définies dans l'attribut de valeur de l'objet de savoir,
déterminer si un format des valeurs suivantes du champ correspond à un format associé à une valeur d'étiquette définie dans l'attribut d'étiquette de l'objet de savoir, et
insérer l'identifiant d'objet de l'objet de savoir dans la liste de résultats, répondant à la détermination que le champ correspond à la valeur de l'attribut de valeur et au format définis dans l'attribut d'étiquette de l'objet de savoir.

3. Procédé selon la revendication 1, dans lequel la mise en correspondance et la vérification du champ par rapport à chaque objet de savoir consiste en outre à :
identifier un second ensemble d'un ou de plusieurs objets de savoir d'un second type parmi la pluralité d'objets de savoir figurant dans la première liste d'objets de savoir ;
déterminer un type de champ du champ ; et
mettre en correspondance le type de champ du champ par rapport à un attribut de structure de chaque objet de savoir pour identifier un sous-ensemble d'objets de savoir comme candidats d'objets de savoir correspondants.

4. Procédé selon la revendication 3, dans lequel le type de champ du champ appartient soit au type alpha, soit numérique ou encore alphanumérique.

5. Procédé selon la revendication 3, consistant en outre à :
déterminer une taille du champ ;
mettre en correspondance la taille du champ par rapport à une taille stockée dans un attribut sizeof de l'objet de savoir ; et
insérer le champ dans une liste d'objets inconnus si la taille du champ ne correspond pas à la taille de l'attribut sizeof.

6. Procédé selon la revendication 5, consistant en outre à :
exécuter un automate fini (FSA) en tant que partie intégrante des données stockées dans l'attribut de valeur de l'objet de savoir, répondant à la détermination que la taille du champ correspond à la taille de l'attribut sizeof de l'objet de savoir ; et
insérer le champ dans une liste d'objets inconnus si l'exécution du FSA n'a pas abouti.

7. Procédé selon la revendication 6, consistant en outre à :
appliquer le procédé de vérification prédéterminé défini dans l'attribut de vérification de l'objet de savoir, répondant à la détermination que l'exécution du FSA correspond à une condition prédéterminée ;
insérer l'ID d'objet de l'objet de savoir dans la liste de résultats, répondant à la détermination que l'application du procédé de vérification prédéterminé est réussie ; et
si tel n'est pas le cas, insérer le champ dans la liste des objets inconnus.

8. Procédé selon la revendication 6, consistant en outre à exécuter un processus d'apprentissage machine sur la liste des objets inconnus aux fins de classification ultérieure des objets inconnus.

9. Procédé selon la revendication 1, consistant en outre à :
en amont de la mise en correspondance et de la vérification du champ par rapport à chaque objet de savoir dans la première liste d'objets de savoir,
concernant chaque champ déterminé à partir des données d'entrée,
mettre en correspondance le champ par rapport à chaque objet d'une pluralité d'objets de savoir de bruit dans une liste d'objets de savoir de bruit, et
répondant à la détermination que le champ correspond à au moins un des objets de savoir de bruit, supprimer le champ des données d'entrée.

10. Procédé selon la revendication 1, consistant en outre à :
recevoir des informations de configuration de référentiel du contrôleur de découverte d'objets, les informations de configuration de référentiel comprenant un lien vers un emplacement de stockage des données d'entrée ;
déterminer un protocole de communication à partir des informations de configuration de référentiel ; et
accéder à l'emplacement de stockage, à travers ledit lien, pour extraire les données d'entrée de l'emplacement de stockage en faisant appel au protocole de communication.

11. Procédé selon la revendication 10, consistant en outre à :
extraire des informations d'authentification des informations de configuration de référentiel, dont un nom d'utilisateur et un mot de passe ; et
exécuter un processus d'authentification en fonction du nom d'utilisateur et du mot de passe pour pouvoir accéder à l'emplacement de stockage.

12. Procédé selon la revendication 2, consistant en outre à :
déterminer si une politique d'application a été activée sur la base d'un attribut de politique validée de l'objet de savoir ;
extraire une politique d'application associée à l'objet de savoir, répondant à la détermination que la politique d'application a été activée ; et
effectuer au moins une action d'application par rapport aux données d'entrée stockées dans l'emplacement de stockage en fonction de la politique d'application,
au moins un certain nombre d'objets de savoir comprennent un attribut d'activation de politique, l'attribut d'activation de politique définissant une politique d'application associée à l'objet de savoir donné.

13. Procédé selon la revendication 12, dans lequel la au moins une action d'application comprend au moins l'une des actions ci-après :
la modification d'une propriété des données d'entrée,
un chiffrement des données d'entrée,
une restriction de l'accès aux données d'entrée, ou
l'envoi d'une alerte à un dispositif de destination prédéterminé, et
dans lequel la restriction de l'accès aux données d'entrée comprend au moins l'une des actions ci-après :
une désactivation de l'impression ou du téléchargement des données d'entrée,
une désactivation d'un compte associé aux données d'entrée,
une mise en quarantaine des données d'entrée,
une restriction du partage ou de la visualisation des données d'entrée, ou
une révocation des droits d'accès aux données d'entrée.

14. Support lisible par machine non transitoire contenant des instructions qui y sont stockées et qui, lorsqu'elles sont exécutées par un processeur, amènent le processeur à appliquer le procédé selon l'une quelconque des revendications 1 à 13.

15. Système de traitement de données, comprenant :
un processeur ; et
une mémoire reliée au processeur pour stocker des instructions qui, lorsqu'elles sont exécutées par le processeur, amènent le processeur à appliquer le procédé selon l'une quelconque des revendications 1 à 13.
